# DEMANDE DE BREVET EUROPEEN

(11) **EP 2 965 672 A1**
(43) Date de publication de la demande: **13.01.2016**
(21) Numéro de dépôt: 14176742.6
(22) Date de dépôt: 11.07.2014
(51) Int. Cl.: A47J 37/06

(54) **Appareil de cuisson**

(71) Demandeur: Babyliss Faco S.P.R.L., 4020 Liège (BE)
(72) Inventeur: Smal, Olivier, 4623 Magnee (BE)
(74) Mandataire: Pronovem

(57) **Abrégé**

La présente invention divulgue un appareil de cuisson électrique (1) de type gril adapté pour être posé sur une table et pour, en utilisation, enfermer les aliments entre une partie supérieure et une partie inférieure, ledit appareil comprenant une base (2) et des plaques de cuisson inférieure (3) et supérieure (4) amovibles et réversibles, lesdites plaques de cuisson étant chacune chauffées par un diffuseur de chaleur inférieur (5) et un diffuseur de chaleur supérieur (6) avec lesquels elles sont en contact, lesdits diffuseurs de chaleur comportant des résistances chauffantes (7) intégrées au sein desdits diffuseurs.

## Description

### Objet de l'invention

La présente invention se rapporte à un appareil de cuisson de type gril comportant des plaques de cuisson amovibles et réversibles posées sur des diffuseurs de chaleur intégrant des résistances de chauffage.

### Etat de la technique

Les dispositifs de cuisson de type gril, plancha ou barbecue sont bien connus des utilisateurs. Ces dispositifs ont évolué ces dernières années vers des modèles plus performants mettant l'accent sur la facilité de nettoyage après la cuisson, sur le multi-usage en faisant varier les reliefs des plaques de cuisson réversibles ou encore sur les réglages de distance entre les parties supérieure et inférieure enfermant l'aliment à cuire.

Des exemples illustratifs de ce type de dispositifs de cuisson sont par exemple divulgués dans les documents WO 2011/003358 A1, WO 2001/045541 A1, WO 2011/032136 A3, WO 2009/066332 A1, WO 2006/126064 A1, EP 1 849 388 A1, EP 1 795 096 B1 et JP 11-239535.

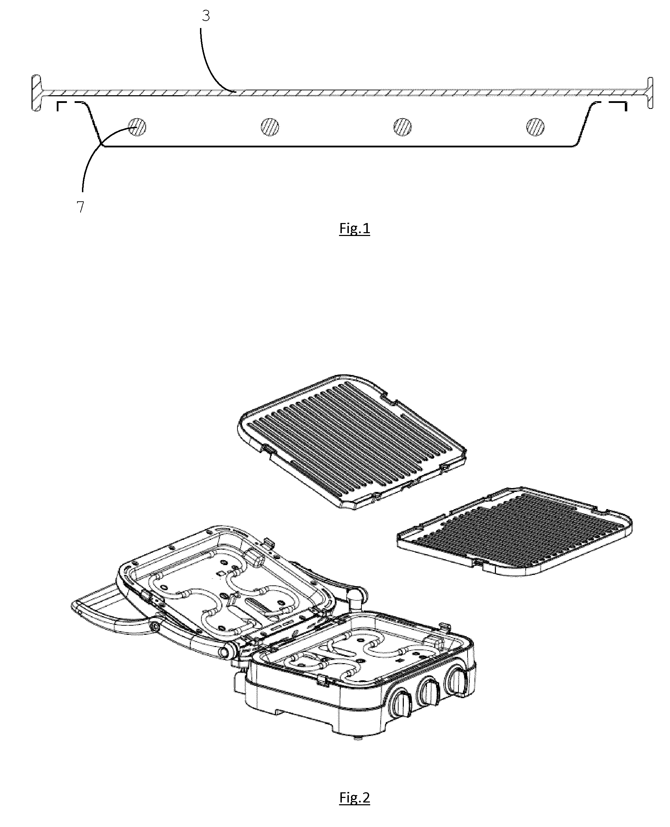

La plupart de ces dispositifs de cuisson comportent des surfaces de cuisson qui sont chauffées par rayonnement à l'aide d'une résistance électrique se trouvant à proximité immédiate et à l'arrière de celle-ci. Dans ce type de disposition, la température des résistances doit être très élevée (> 600°C) pour arriver à chauffer la surface de cuisson à environ 200°C dans un délai acceptable de quelques minutes. Ceci est illustré aux figures 1 à 4. Ces températures provoquent des fissures dans les matériaux réfractaires (céramiques) entourant les filaments chauffants et génèrent par conséquent des courants de fuite indésirables.

D'autres dispositifs comportent une multitude de plaques de cuisson auxiliaires qui peuvent être insérées entre deux côtés chauffants et qui finissent par encombrer la cuisine. Les constructeurs de ce type d'appareil se sont donc tournés vers des modèles comportant des plaques de cuisson réversibles au sein d'un même appareil. Ces plaques de cuisson peuvent être par exemple lisses d'un côté et posséder un relief de l'autre.

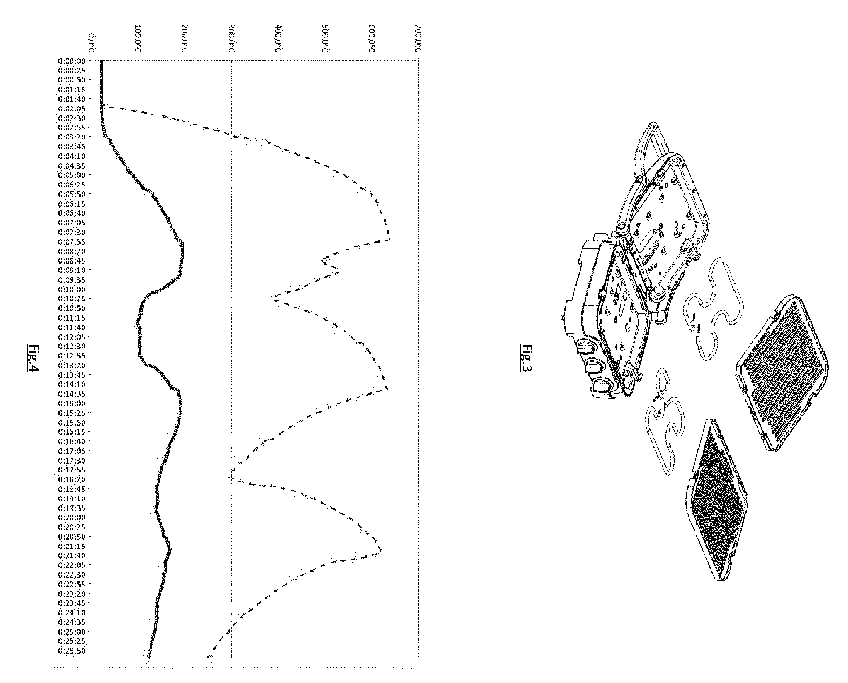

Les plaques de cuisson réversibles comportent généralement une couche anti-adhésion de polymère fluorocarboné (PTFE) de chaque côté. Dans le mode de chauffage privilégiant le rayonnement, on se retrouve alors avec une telle surface antiadhésive face à des résistances chauffées à plus de 600°C (voir Fig. 4), ce qui abime rapidement cette couche qui n'est pas capable de résister longtemps à de telles températures et qui commence à se dégrader à partir de 300°C.

Il était donc nécessaire d'adopter une disposition du système de chauffage électrique qui permette d'éviter les pics de température dus à la régulation et de diffuser la chaleur prioritairement par conduction plutôt que par rayonnement, tout en maintenant la fonction de réversibilité des plaques de cuisson de type multi-usage et leur amovibilité aisée pour garantir une facilité de nettoyage.

Le document JP 11-239535 divulgue un dispositif de cuisson comportant un récipient de cuisson amovible et réversible. Le récipient de cuisson est géométriquement adapté pour être en contact intime avec son diffuseur de chaleur unique qui comporte des résistances chauffantes intégrées. Ce dispositif n'est pas adapté pour enfermer l'aliment à cuire entre deux plaques de cuisson chauffées, ce qui limite son utilisation à des cuissons « ouvertes » ou avec couvercle.

### Buts de l'invention

La présente invention vise à surmonter les inconvénients de l'état de la technique en proposant un appareil de cuisson réunissant à la fois les fonctions de réversibilité et d'amovibilité des plaques de cuisson dans un contexte de chauffage qui privilégie la conduction. Ce type de diffusion de chaleur permet de sauvegarder l'intégrité des revêtements antiadhésifs en contact avec le diffuseur de chaleur dont la température est mieux répartie et de loin inférieure aux moyens de chauffage par rayonnement de l'état de la technique.

L'invention permet aussi une meilleure isolation de la résistance chauffante dont les contraintes thermiques sont bien inférieures à celles des appareils de l'état de la technique et permettent de ce fait un meilleur contrôle des courants de fuite.

### Résumé de l'invention

La présente invention divulgue un appareil de cuisson électrique de type gril adapté pour être posé sur une table et pour pouvoir, en utilisation, enfermer les aliments entre une partie supérieure et une partie inférieure, ledit appareil comprenant une base et des plaques de cuisson inférieure et supérieure amovibles et réversibles, lesdites plaques de cuisson étant chacune chauffées par un diffuseur de chaleur inférieur et un diffuseur de chaleur supérieur avec lesquels elles sont en contact, lesdits diffuseurs de chaleur comportant des résistances chauffantes entièrement ou partiellement intégrées audits diffuseurs.

Selon des modes d'exécution préférés de l'invention, l'appareil comporte au moins une des caractéristiques suivantes :
- le niveau d'intégration des résistances chauffantes au sein des diffuseurs de chaleur atteint un contact de surface avec les résistantes chauffantes supérieur à 50%, de préférence supérieur à 75% ;
- les diffuseurs de chaleur sont posés sur des ressorts permettant de maintenir une pression contre les plaques de cuisson inférieure et supérieure fixées par un dispositif de calage pour assurer un contact franc entre les plaques de cuisson et les diffuseurs de chaleur ;
- la température de la résistance intégrée aux diffuseurs de chaleur reste inférieure, en utilisation, à 400°C, et de préférence inférieure à 350°C ;
- l'appareil comporte une sonde de température poussée, en utilisation, contre au moins une plaque de cuisson par l'intermédiaire d'un ressort, sans être en contact direct avec les diffuseurs de chaleur, la sonde de température étant reliée à un moyen de régulation permettant d'asservir la puissance de l'appareil à la température mesurée ;
- la sonde de température est configurée de manière conique pour assurer un contact avec les diffuseurs de chaleur et ainsi constituer une sécurité passive contre la surchauffe en cas d'absence de plaques de cuisson ;
- les résistances chauffantes sont noyées dans les plaques de diffusion avec un contact de surface de 100% ;
- chacune des plaques de cuisson réversibles et amovibles comporte des reliefs différents sur sa face orientée vers les aliments à cuire et sur celle orientée vers ledit diffuseur de chaleur ;
- les plaques de cuisson comportent une couche polymérique anti-adhérente sur chaque surface ;
- l'appareil comporte un moyen de réglage de pression exercée, en utilisation, par les parties supérieure et inférieure de l'appareil sur l'aliment à cuire ;
- ledit moyen de régulation de pression est un ressort positionné sur la charnière reliant la partie supérieure à la partie inférieure de l'appareil.

### Brève description des figures

La figure 1 représente schématiquement une vue en coupe de la disposition des moyens de chauffage dans un dispositif de cuisson de type gril selon l'état de la technique. Ici, les résistances chauffantes ne sont pas en contact avec la plaque de cuisson et la transmission de chaleur se fait principalement par rayonnement.

La figure 2 représente une vue en trois dimensions des éléments constitutifs d'un appareil de cuisson selon l'état de la technique. Ici, les plaques de cuisson sont également amovibles et réversibles.

La figure 3 représente une vue éclatée en trois dimensions des éléments constitutifs d'un appareil de cuisson selon l'état de la technique.

La figure 4 représente l'évolution de la température des résistances chauffantes (ligne en pointillé) et des plaques de cuisson (ligne continue) d'un appareil selon l'état de la technique en fonction du temps. Il s'agit ici de mesures en conditions réelles sur une période de 25 minutes. On voit que la variation de température des résistances est très importante et présente des pics de régulation importants puisqu'elle varie entre 300 et 640°C environ. Même la température de la plaque de cuisson varie de manière sensible entre 100 et 200°C environ.

La figure 5 représente schématiquement une vue en coupe de la partie inférieure de l'appareil selon l'invention, et plus particulièrement la disposition des moyens de chauffage. Sur ce mode d'exécution de l'invention, les résistances chauffantes sont complètement intégrées au diffuseur de chaleur. On y voit également les ressorts qui poussent les diffuseurs de chaleur contre les plaques de cuisson et les clips de fixation à ressort qui maintiennent les plaques de cuisson sur l'appareil.

La figure 6 représente l'évolution de la température des résistances chauffantes et des plaques de cuisson de l'appareil selon l'invention en fonction du temps. Il s'agit ici encore une fois d'une mesure en conditions réelles sur une période de 22 minutes. On voit que la variation de température des résistances est très faible, avec des pics de faible ampleur, puisqu'elle varie seulement entre 250 et 320°C. La plaque de cuisson monte progressivement en température, pour atteindre 200°C après 8 minutes et la température reste quasiment constante à environ 200°C à partir de là.

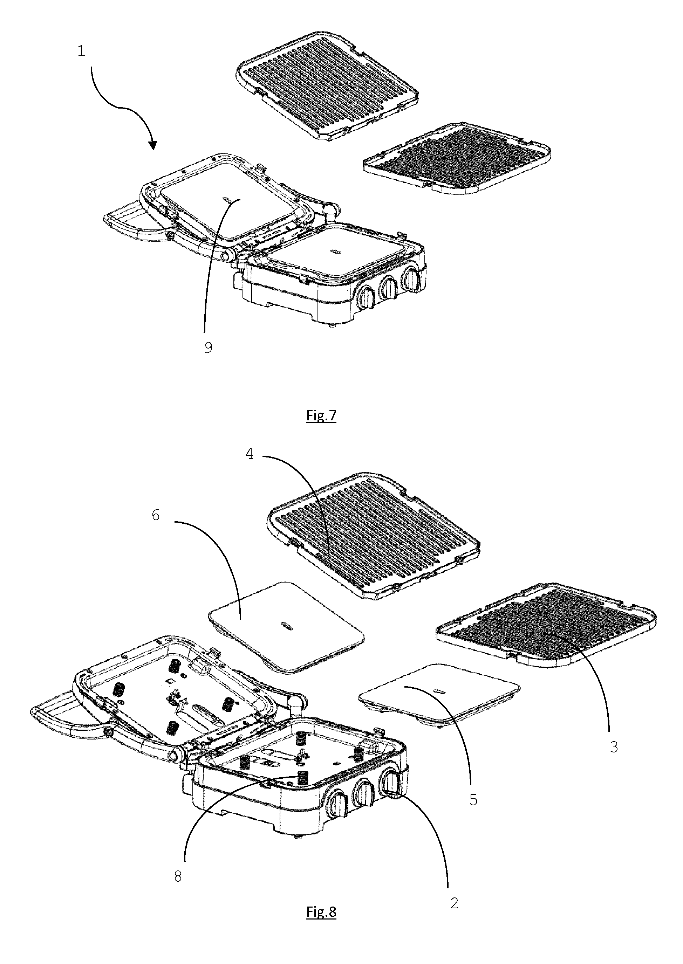

La figure 7 représente une vue en trois dimensions des éléments constitutifs d'un appareil de cuisson selon l'invention.

La figure 8 représente une vue éclatée en trois dimensions des éléments constitutifs d'un appareil de cuisson selon l'invention.

La figure 9 représente une vue en trois dimensions d'un appareil de cuisson selon l'invention en configuration ouverte.

La figure 10 représente l'appareil selon l'invention en position fermée avec le mécanisme de réglage de pression exercée sur l'aliment à cuire.

La figure 11 montre un exemple d'intégration des résistances chauffantes dans les diffuseurs de chaleur avec un contact de surface de 50% (Fig.11a), 75% (Fig.11b) et 100% (Fig.11c).

### Liste des symboles de référence

1. Appareil de cuisson
2. Base de l'appareil
3. Plaque de cuisson inférieure
4. Plaque de cuisson supérieure
5. Diffuseur de chaleur inférieur
6. Diffuseur de chaleur supérieur
7. Résistance chauffante du diffuseur de chaleur
8. Ressorts de maintien de pression des diffuseurs de chaleur contre la plaque de cuisson
9. Sonde de température
10. Ressort de maintien de pression de la sonde de température contre la plaque de cuisson
11. Mécanisme de réglage de la pression exercée sur l'aliment à cuire
12. Mécanisme de fixation des plaques de cuisson

### Description détaillée de l'invention

La présente invention présente un appareil de cuisson 1 de type gril permettant d'enfermer les éléments à cuire entre deux surfaces chauffantes, une partie chauffante supérieure et une partie chauffante inférieure. Les deux parties sont généralement articulées autour d'une ou de plusieurs charnières permettant d'ouvrir et de refermer l'appareil. La puissance développée par ce type d'appareil varie entre 1600 et 2200 Watt selon les modèles. Il peut être utilisé en position ouverte ou fermée, et est généralement disposé sur un support comme une table par exemple.

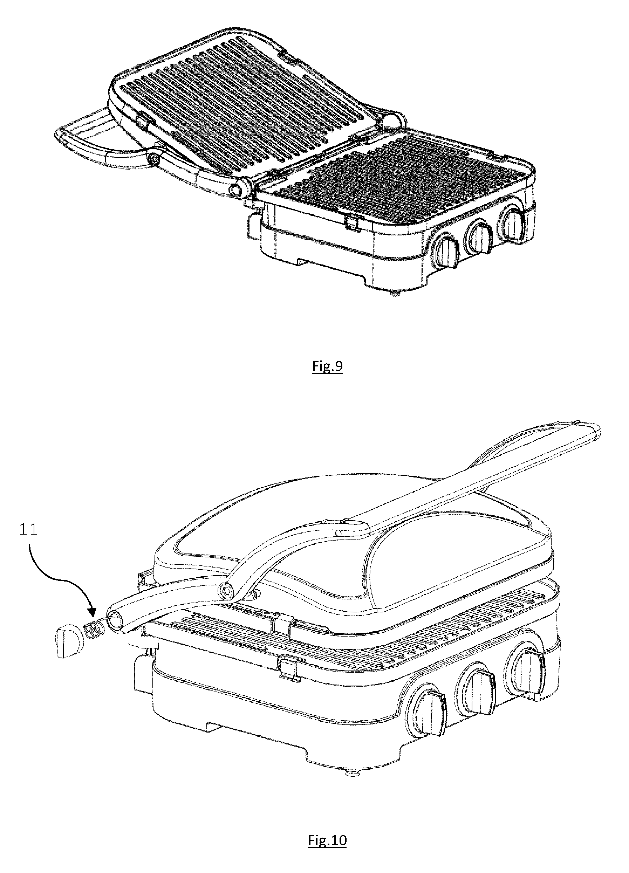

L'appareil est muni d'un dispositif de commande et de réglage de température qui se trouve généralement sur la base 2 de l'appareil (voir Figs. 9 et 10). Le dispositif de commande est relié à une sonde de température 9 située au milieu des plaques chauffantes qualifiées de diffuseurs de chaleur (5,6) qui sont directement en contact avec les plaques de cuisson (3,4). Les modèles les plus performants permettent le réglage de la température séparément pour le côté supérieur et le côté inférieur.

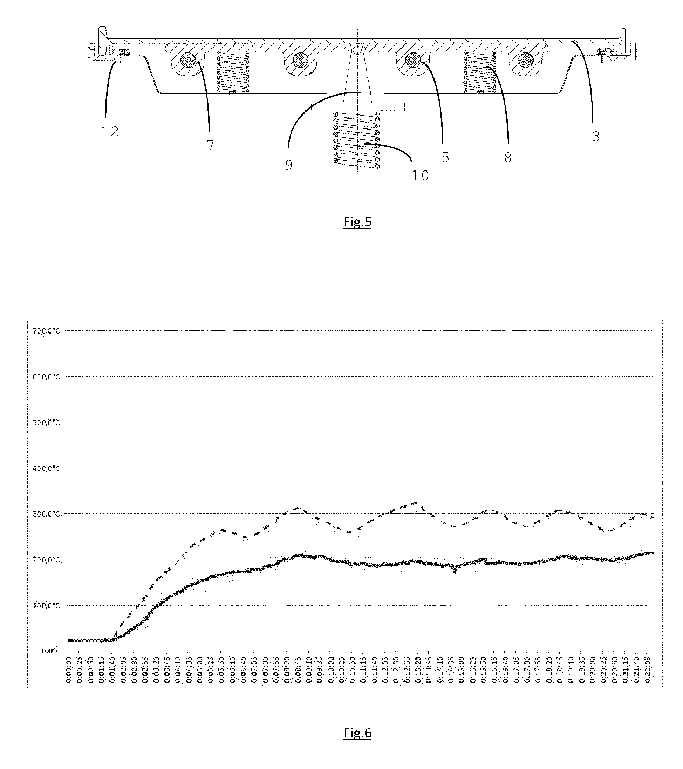

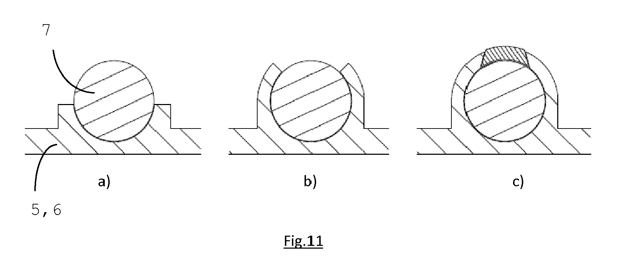

Les diffuseurs de chaleur 5 et 6 sont généralement en aluminium mais d'autres matériaux conducteurs sont évidemment envisageables. Ils sont munis de résistances chauffantes intégrées 7. Dans la figure 5, ces résistances 7 sont complètement noyées dans les diffuseurs en aluminium (100% de contact de surface). Pour atteindre l'objectif de la transmission privilégiée de chaleur par conduction, il n'est cependant pas toujours nécessaire que les résistances 7 soient complètement noyées dans le métal des diffuseurs. Il suffit que le contact entre ces résistances et le diffuseur de chaleur soit suffisant et qu'il y ait un contact de surface entre les diffuseurs (5,6) et les résistances chauffantes 7 supérieur à 50%, de préférence supérieur à 60%, et de manière particulièrement préférée supérieur à 75%. Un contact de surface de 50% signifie que la résistance chauffante est intégrée à moitié au diffuseur de chaleur. Ceci est illustré dans la figure 11 où 50%, 75% et 100% de contact de surface sont respectivement représentés.

De nombreuses formes de résistances sont bien entendu possibles (plates notamment), mais seule l'efficacité de la transmission de chaleur par conduction doit être déterminante, l'idée étant de créer une configuration permettant un échange de chaleur rapide entre les résistances 7 et les diffuseurs (5,6) afin de limiter au maximum d'éventuels pics de température locaux.

Le transfert de chaleur par conduction permet à la plaque de cuisson d'avoir une meilleure réactivité et aussi une température plus constante et plus uniforme dans le temps. En effet, le transfert de chaleur étant plus efficace, une chute de température due à l'ajout d'un aliment froid sur la plaque est rapidement compensée pour retrouver la température initiale. C'est également cette efficacité qui permet d'imposer une consigne de température moins élevée que dans les dispositifs de l'art antérieur.

Selon un mode d'exécution avantageux de l'invention, l'appareil comporte en outre un moyen de régulation 11 de pression exercée par la partie supérieure et la partie inférieure sur l'aliment à cuire qui est enfermé entre les deux parties afin de contrôler, en utilisation, le niveau de compression (voir Fig. 10).

Les résistances chauffantes comportent un fil résistif par exemple composé de nickel (80%) et de chrome (20%) qui est bobiné au centre de l'élément chauffant. Les deux fils sont soudés aux deux extrémités et vont permettre la connexion électrique. Le fil résistif est isolé électriquement de la gaine métallique extérieure par des matériaux réfractaires compactés autour de celui-ci. Ces matériaux permettent de diffuser rapidement la chaleur du fil résistif chauffant à la gaine métallique extérieure intégrée dans les diffuseurs 5 et 6. La gaine métallique extérieure peut être réalisée en acier inoxydable, cuivre, nickel, titane, ... Les matériaux réfractaires sont généralement des oxydes métalliques, comme par exemple une poudre d'oxyde de magnésium. La température de la résistance qui est atteinte dans le dispositif selon l'invention étant moins élevée, elle permet de limiter la dilatation du matériau réfractaire et ainsi les fissures provoquant des courants de fuite.

Les diffuseurs de température 5 et 6 permettent également une meilleure répartition de chaleur sur toute la surface de la plaque de cuisson, ce qui n'est généralement pas atteint avec les appareils de l'état de la technique qui fonctionnement principalement par rayonnement et qui génèrent des pics de température à l'endroit où sont localisées les résistances 7. Les diffuseurs de chaleur montrés sur les figures représentant l'appareil selon l'invention sont formés d'une seule pièce. Il est bien entendu envisageable que ces diffuseurs puissent prendre d'autres formes pouvant répondre à l'exigence d'une transmission de chaleur optimale vers les plaques de cuisson amovibles.

La sonde de température 9 représentée dans la figure 5 est poussée contre la plaque de cuisson par un ressort 10. Il y a un espace entre la sonde de température et les diffuseurs (répartisseurs) de chaleur afin d'éviter le contact direct avec les diffuseurs de chaleur pour que la sonde de température mesure réellement la température de la plaque de cuisson, et non celle des diffuseurs de chaleur. En l'absence de plaque de cuisson, la forme conique de la sonde de température 9 assure un contact avec les diffuseurs de chaleur 5 et 6 et fonctionne ainsi comme sécurité passive pour empêcher la surchauffe de l'appareil.

Les plaques de cuisson 3 et 4 peuvent prendre différentes formes. Du fait qu'elles sont réversibles, elles ont généralement un côté sensiblement lisse et un autre côté présentant un relief, comme par exemple des nervures. Les plaques de cuisson sont donc réversibles et fixées de manière amovible sur l'appareil par l'intermédiaire d'un mécanisme de fixation 12 de manière à être en contact franc avec les diffuseurs de chaleur 5 et 6. Ce contact est assuré par des ressorts 8 supportant les diffuseurs de chaleur et permettant d'exercer une pression sur ceux-ci. L'amovibilité des plaques de cuisson facilite grandement leur nettoyage après l'utilisation et permet à la partie chauffante électrique de ne jamais être en contact avec l'eau.

Même lorsque le côté comportant un relief est en contact avec le diffuseur de chaleur, la transmission de chaleur par conduction est meilleure que dans une configuration selon l'état de la technique privilégiant le rayonnement.

## Revendications

1. Appareil de cuisson électrique (1) de type gril adapté pour être posé sur une table et pour pouvoir, en utilisation, enfermer les aliments entre une partie supérieure et une partie inférieure, ledit appareil comprenant une base (2) et des plaques de cuisson inférieure (3) et supérieure (4) amovibles et réversibles, lesdites plaques de cuisson étant chacune chauffées par un diffuseur de chaleur inférieur (5) et par un diffuseur de chaleur supérieur (6) avec lesquels elles sont en contact, lesdits diffuseurs de chaleur (5,6) comportant des résistances chauffantes (7) entièrement ou partiellement intégrées audits diffuseurs (5,6).

2. Appareil de cuisson (1) selon la revendication 1, dans lequel le niveau d'intégration des résistances chauffantes (7) au sein des diffuseurs de chaleur (5,6) atteint un contact de surface avec les résistantes chauffantes (7) supérieur à 50%, de préférence supérieur à 75%.

3. Appareil de cuisson (1) selon l'une quelconque des revendications 1 ou 2, dans lequel les diffuseurs de chaleur (5,6) sont posés sur des ressorts (8) permettant de maintenir une pression contre les plaques de cuisson inférieure (3) et supérieure (4) fixées par un dispositif de calage pour assurer un contact franc entre les plaques de cuisson (3,4) et les diffuseurs de chaleur (5,6).

4. Appareil de cuisson (1) selon l'une quelconque des revendications précédentes, dans lequel la température de la résistance (7) intégrée aux diffuseurs de chaleur (5,6) reste inférieure, en utilisation, à 400°C, et de préférence inférieure à 350°C.

5. Appareil de cuisson (1) selon l'une quelconque des revendications précédentes, comportant une sonde de température (9) poussée, en utilisation, contre au moins une plaque de cuisson (3,4) par l'intermédiaire d'un ressort (10), sans être en contact direct avec les diffuseurs de chaleur (5,6), la sonde de température (9) étant reliée à un moyen de régulation permettant d'asservir la puissance de l'appareil à la température mesurée.

6. Appareil de cuisson (1) selon l'une quelconque des revendications précédentes, dans lequel la sonde de température (9) est configurée de manière conique pour assurer un contact avec les diffuseurs de chaleur (3,4) et ainsi constituer une sécurité passive contre la surchauffe en cas d'absence de plaques de cuisson (5,6).

7. Appareil de cuisson (1) selon l'une quelconque des revendications précédentes, dans lequel les résistantes chauffantes (7) sont noyées dans les plaques de diffusion avec un contact de surface de 100%.

8. Appareil de cuisson (1) selon l'une quelconque des revendications précédentes, **caractérisé en ce que** chacune des plaques de cuisson (3,4) réversibles et amovibles comporte des reliefs différents sur sa face orientée vers les aliments à cuire et sur celle orientée vers ledit diffuseur de chaleur.

9. Appareil de cuisson (1) selon l'une quelconque des revendications précédentes, dans lequel les plaques de cuisson (3,4) comportent une couche polymérique anti-adhérente sur chaque surface.

10. Appareil de cuisson (1) selon l'une quelconque des revendications précédentes comportant un moyen de réglage (11) de pression exercée, en utilisation, par les parties supérieure et inférieure de l'appareil sur l'aliment à cuire.

11. Appareil de cuisson (1) selon l'une quelconque des revendications précédentes, dans lequel ledit moyen de régulation de pression est un ressort positionné sur la charnière reliant la partie supérieure à la partie inférieure.
